# EUROPÄISCHE PATENTANMELDUNG

(11) **EP 4 848 084 A1**
(43) Veröffentlichungstag der Anmeldung: **02.12.2026**
(21) Anmeldenummer: 25179544.9
(22) Anmeldetag: 28.05.2025
(51) Int. Cl.: G06F 9/455, G06F 8/71, G06F 8/61

(54) **FEHLERREDUZIERTE INSTANZIIERUNG VON CONTAINERISIERTEN ANWENDUNGEN**

(71) Anmelder: Siemens Aktiengesellschaft, 80333 München (DE)
(72) Erfinder: Knierim, Christian, 81373 München (DE)
(74) Vertreter: Siemens Patent Attorneys

(57) **Zusammenfassung**

Es wird ein Verfahren zur fehlerreduzierten Ausführung einer containerisierten Anwendung vorgeschlagen. Dieses umfasst folgende Schritte
- Bereitstellen eines für die Ausführung der Anwendung benötigten Container-Images für die containerisierte Anwendung,
- Signieren des Container-Images mit einer Signatur, die eine anwendungsbezogene Information enthält,
- Bereitstellen einer Deployment-Konfiguration für die containerisierte Anwendung mit einer Information zu dem für die Ausführung der Anwendung benötigten Container-Image,
- Signieren der Deployment-Konfiguration mit einer Signatur, die eine Referenz auf die Anwendung enthält,
- Übergeben der Deployment-Konfiguration an einen Orchestrator zur Instanziierung der Anwendung,
- Validieren der Signatur der Deployment-Konfiguration und Identifizieren der Anwendung mit Hilfe der Signatur, und
- Zugreifen auf das Container-Image sowie Validieren des Container-Images als für die Anwendung bereitgestelltes Image mit Hilfe der in der Signatur enthaltenen anwendungsspezifischen Information.

Die Erfindung erhöht die Zuverlässigkeit bzw. reduziert Fehler, indem Images auf die Zugehörigkeit zu Deployment-Konfigurationen validiert werden.

## Beschreibung

Die Erfindung betrifft ein Verfahren zur fehlerreduzierten Ausführung einer containerisierten Anwendung sowie eine Vorrichtung, die zur Ausführung eines erfindungsgemäßen Verfahrens ausgestaltet ist.

Container-Instanzen werden aus Container-Images (auch der Begriff "Container-Abbild" statt "Container-Image" ist gebräuchlich) gebildet, indem diese innerhalb einer Deployment-Konfiguration (z.B. einem Kubernetes Manifest, einem Helm-Chart oder einer Docker-Compose-Datei) referenziert werden. Generell können hierbei die gleichen Container-Images von unterschiedlichen Deployment-Konfigurationen referenziert werden und auch durch Zuweisung von Ressourcen und Privilegien unterschiedlich instanziiert oder auch in unterschiedlichen Gesamt-Applikationskontexten eingesetzt werden.

Die Deployment-Konfiguration beschreibt somit neben der Instanziierung des Images selbst auch den Ausführungsort (z.B. Kubernetes-Namespace) und welche Host-Ressourcen (Netzwerke, persistente Speicherbereiche, Linux Namespaces oder Linux Capabilities oder CPU- und Speicher-Ressourcen) bei der Instanziierung zugeordnet werden sollen. Üblicherweise werden solche Deployment-Konfigurationen an ein zentrales Management-System bzw. Orchestrator, wie z.B. einer Kubernetes-Control-Plane oder dem Siemens Industrial Edge Management-System übergeben. Innerhalb dieses Managementsystems kann entweder eine Ausführungsumgebung (z.B. Kubernetes Node oder Industrial Edge Device; die Begriffe "Laufzeitumgebung" und "runtime environment" sind ebenfalls gebräuchlich) vom Benutzer ausgewählt werden oder es erfolgt die Zuweisung automatisch aufgrund vordefinierter Kriterien (z.B. Node-Auslastung usw.) durch eine innerhalb des Orchestrators bereitgestellte Scheduler-Komponente.

Im Falle des Siemens Managementsystems "Industrial Edge" werden auch komplette Applikations-Bündel - so genannte "Industrial Edge Apps" - erstellt, innerhalb derer neben der oben beschriebenen Docker-Compose-Datei (Deployment-Konfiguration) auch die Container-Images mitgeliefert werden. Die komplette Applikation besteht somit aus mehreren Images und Konfigurationen und stellt somit Gesamteinheit dar, die durch den App-Ersteller definiert wurde.

Auf der Ausführungsumgebung (also dem sog. "Industrial Edge Device" oder dem Kubernetes-Knoten bzw Node) entsteht nun jedoch das Problem, dass für eine App bzw. Anwendung hinterlegte Images sowohl ausgetauscht werden können (sofern diese nicht über den Hash eindeutig referenziert werden) und gleichzeitig für andere Apps zur Verfügung gestellte Images von anderen Deployment-Konfigurationen referenziert und somit mit unterschiedlichen Berechtigungen und Kontexten zur Ausführung gebracht werden können, obwohl dies der ursprüngliche Entwickler eigentlich verhindern möchte.

Die Erfindung hat zur Aufgabe, die oben beschriebenen Probleme zu vermeiden.

Die Aufgabe wird durch ein Verfahren zur fehlerreduzierten Ausführung einer containerisierten Anwendung nach Anspruch 1 und eine Vorrichtung zur Durchführung eines erfindungsgemäßen Verfahrens nach Anspruch 11 gelöst. Vorteilhafte Weiterbildungen sind in den Unteransprüchen angegeben.

Das erfindungsgemäße Verfahren zielt auf eine fehlerreduzierte Instanziierung bzw. Ausführung einer containerisierten Anwendung ab, bei der Fehler durch Rückgriff auf nicht für die Anwendung vorgesehene Container-Images bzw. eine nicht dem Konzept der Anwendung voll entsprechende Anlage von Ressourcen vermieden werden.

Erfindungsgemäß wird ein für die Ausführung der Anwendung benötigtes Container-Image für die containerisierte Anwendung z.B. in einer Container-Registry bereitgestellt und mit einer Signatur signiert, die eine anwendungsbezogene Information enthält. Es kann natürlich auch eine Mehrzahl von Container-Images bereitgestellt und signiert werden sowie dann in dem Verfahren zum Einsatz kommen. Diese eher typische Konstellation ist von den Ansprüchen umfasst. Im Hinblick darauf ist der unbestimmte Artikel "ein" an den entsprechenden Stellen der Ansprüche im Sinne von "mindestens ein" zu verstehen.

Bei der anwendungsbezogenen Information handelt es sich um eine Information, die eine Verbindung zu der Anwendung herstellt und eine Identifikation der Anwendung als zu einer Deployment-Konfiguration zugehörig erlaubt. Es handelt sich dabei z.B. um eine Identifikationsinformation (z.B. Name der Anwendung), die auch mehrteilig sein kann (Name, Version, ...).

Erfindungsgemäß wird zudem eine Deployment-Konfiguration für die containerisierte Anwendung mit einer Information zu dem für die Ausführung der Anwendung benötigten Container-Image bereitgestellt, d.h. die Deployment-Konfiguration sieht den Gebrauch des Container-Image für die Instanziierung der Anwendung vor (z.B. wird das Container-Image referenziert oder als Bestandteil der Deployment-Konfiguration mitgeliefert). Statt einer Deployment-Konfiguration kann es sich auch um eine Mehrzahl von verketteten Deployment-Konfigurationen handeln (im Weiteren ist aber der Einfachheit halber von "einer" Deployment-Konfiguration die Rede; im Falle einer Mehrzahl von Deployment-Konfigurationen sind entsprechende Schritte als für jede der Konfigurationen durchgeführt zu interpretieren). In der Fachwelt sind auch sog. Applikationsbündel (Application Bundle) beschrieben, welche funktional den Deployment-Konfigurationen korrespondieren. Im Rahmen dieser Anmeldung sind sie unter den Begriff "Deployment-Konfiguration" zu subsumieren.

Die Deployment-Konfiguration wird mit einer Signatur signiert, die eine Referenz auf die Anwendung enthält. Bei dieser Referenz kann es sich auch z.B. um eine Identifizierungsinformation handeln. Die Signaturen von dem Container-Image und der Deployment-Konfiguration können mit dem gleichen Signierschlüssel durchgeführt oder auch mittels einer Zertifikatskette (Chain-of-trust) miteinander verknüpft sein.

Im Zuge des erfindungsgemäßen Verfahrens wird die Deployment-Konfiguration an einen Orchestrator zwecks Instanziierung der Anwendung übergeben. Der Begriff "Orchestrator" ist hierbei weit auszulegen. Prinzipiell ist jedes Management-System eingeschlossen, dass mit Hilfe einer Deployment-Konfiguration eine containerisierte Anwendung zur Durchführung auf einer Laufzeitumgebung instanziiert. Insbesondere ist dadurch auch eingeschlossen, dass der Orchestrator auf Orchestrator-externe Dienste bzw. Komponenten zurückgreift, denen der Orchestrator vertraut, und die bestimmte für die Orchestrierung erforderliche Funktionen realisieren (z.B. Admission Controller bei Kubernetes als Orchestrator). Z.B. ist eine dem eigentlichen Orchestrator vorgelagerte Validierung der Deployment-Konfiguration im Rahmen der Anspruchsformulierungen dem Orchestrator zuzurechnen. Eine Validierung der Signatur der Deployment-Konfiguration kann aber auch durch den Orchestrator selbst erfolgen. Auf dieser Basis (d.h. mit Hilfe der Signatur) wird die Anwendung identifiziert. Für die Instanziierung wird z.B. auf eine Container-Registry zugegriffen und der Container-Images als für die Anwendung bereitgestelltes Image mit Hilfe der in der Signatur enthaltenen anwendungsspezifischen Information validiert. Dabei kann vorgesehen sein, dass auf die Container-Registry durch eine Laufzeitumgebung zugegriffen wird, die vom Orchestrator für die Ausführung der containerisierten Anwendung bestimmt wird. Für die Validierung des Container-Images als für die Anwendung bereitgestelltes Image gibt es dann prinzipiell folgende beiden Optionen:
a) Sie wird durch die Laufzeitumgebung durchgeführt, und dafür wird die Referenz auf die Anwendung oder eine mittels der Referenz erhaltene Information zur Identifikation der Anwendung von dem Orchestrator an die Laufzeitumgebung übermittelt.
b) Die Validierung des Container-Images als für die Anwendung bereitgestelltes Image wird durch den Orchestrator durchgeführt und dafür wird die anwendungsbezogene Information von der Laufzeitumgebung an den Orchestrator übermittelt.

Gemäß einer Ausgestaltung des erfindungsgemäßen Verfahrens enthält die Signatur des Container-Images eine Information zu einer für die Anwendung benötigten Ressource. (Hierbei ist "ein" wieder im Sinne von "mindestens ein" zu verstehen und die auf die Ressource bezogenen Schritte können für jede Ressource einer Mehrzahl von Ressourcen erfolgen.) Typischerweise spezifizierte die Deployment-Konfiguration für die Anwendung benötigte Ressourcen (in der Regel alle benötigten Ressourcen). So kann mittels der Information zu der benötigten Ressource und der Spezifizierung von benötigten Ressourcen in der Deployment-Konfiguration die Ressource validiert werden. Diese Validierung kann wieder entweder durch den Orchestrator oder eine für die Anwendung vom Orchestrator festgelegte bzw. verwendete Laufzeitumgebung erfolgen. Beispielsweise erfolgt nach Parsing der Deployment-Konfiguration und der Kennzeichnung der Ressource als für die Anwendung bereitzustellende bzw. anzulegende oder zu erzeugende Ressource eine Zuordnung einer die Anwendung identifizierender Information, welche zusammen mit einem Request bzw. Auftrag zur Erzeugung oder Bereitstellung der Ressource von dem Orchestrator an die Laufzeitumgebung übermittelt wird. Die Laufzeitumgebung validiert dann die Ressource anhand der Informationen zu Ressourcen in der Signatur des Container-Images. Die Bereitstellung oder Anlegung der Ressource erfolgt dann vorzugsweise erst nach erfolgreicher Validierung. Weitergehend kann die vollständige Instanziierung bzw. Ausführung der Anwendung von der Validierung aller benötigten Ressourcen abhängig gemacht werden. Die Gültigkeit der Validierung von Ressourcen kann auf eine festgelegte Laufzeitumgebung oder auf einen Teil einer festgelegten Laufzeitumgebung beschränkt werden.

Gemäß einer Weiterbildung des erfindungsgemäßen Verfahrens enthält die Signatur des Container-Images eine Information zu einer Bedingung für die Verwendung einer Ressource bei der Anwendung. Vor der vollständigen Instanziierung bzw. Ausführung der Anwendung wird diese Bedingung dann überprüft.

Gemäß einer Ausgestaltung des erfindungsgemäßen Verfahrens werden für die Signatur des Container-Images und der Deployment-Konfiguration der gleiche Signierschlüssel verwendet oder beide Signaturen über eine Zertifikatskette (Chain-of-Trust) miteinander verknüpft.

Die Erfindung betrifft auch eine Vorrichtung, die zur Durchführung eines erfindungsgemäßen Verfahrens ausgebildet ist. Diese kann insbesondere auch als verteilte Struktur bzw. System mit einer Mehrzahl von separaten Vorrichtungselementen (z.B. Rechner) realisiert sein. Z.B.

können dann Orchestrator und Laufzeitumgebung auf unterschiedlichen Vorrichtungsbestandteilen bzw. Geräten implementiert sein.

Herkömmlich liegt auf der Ausführungsumgebung (z.B. dem Kubernetes-Node oder dem Industrial Edge Device) keine Information darüber vor, von welcher Deployment-Konfiguration das zu startende Image referenziert wurde bzw. die Startfreigabe für eine Instanz wird nicht von der Deployment-Konfiguration abhängig gemacht. Hier setzt die Erfindung an. Durch sie kann sichergestellt werden, dass die Ausführungsumgebung nur Images startet, sofern diese von einer bestimmten Deployment-Konfiguration referenziert wurde und zusätzlich die dort definierte Gesamtapplikation auch mit den vorgesehenen Berechtigungen vollständig zur Ausführung gebracht wird.

Die Erfindung wird im Folgenden im Rahmen eines Ausführungsbeispiels näher beschrieben. Es zeigen
Fig. 1: eine Übersicht der beim Verfahren beteiligten Komponenten,
Fig. 2: eine Definition der Abhängigkeiten zwischen der Container-Signatur, der signierten Deployment-Konfiguration und den darin definierten Ressourcen,
Fig. 3: den Ablauf eines erfindungsgemäßen Verfahrens bei der Ressourcenerzeugung und
Fig. 4: ein Beispiel für ein Managementsystem, bei dem die Erfindung Verwendung finden kann.

Bei dem Ausführungsbeispiel wird so vorgegangen, dass ein zentrales Management-System (z.B. eine Kubernetes Control Plane oder ein Industrial Edge Management-System) eine signierte Deployment-Konfiguration bzw. ein signiertes Applikationsbündel annimmt, diese validiert, interpretiert und entsprechende Ressourcen auf den orchestrierten Ausführungsumgebungen (z.B. einem Industrial Edge Device oder Kubernetes Nodes) zur Erzeugung anfragt. Diese Ausführungsumgebungen geben jedoch die Erzeugung der Ressourcen erst frei, wenn diese mit Hilfe des Management-Systems validiert haben, dass diese von der ursprünglichen Deployment-Konfiguration bereitgestellt bzw. indiziert wurden und auch sämtliche darin beschriebene Ressourcen innerhalb der orchestrierten Umgebung durch das Managementsystem angefragt wurden.

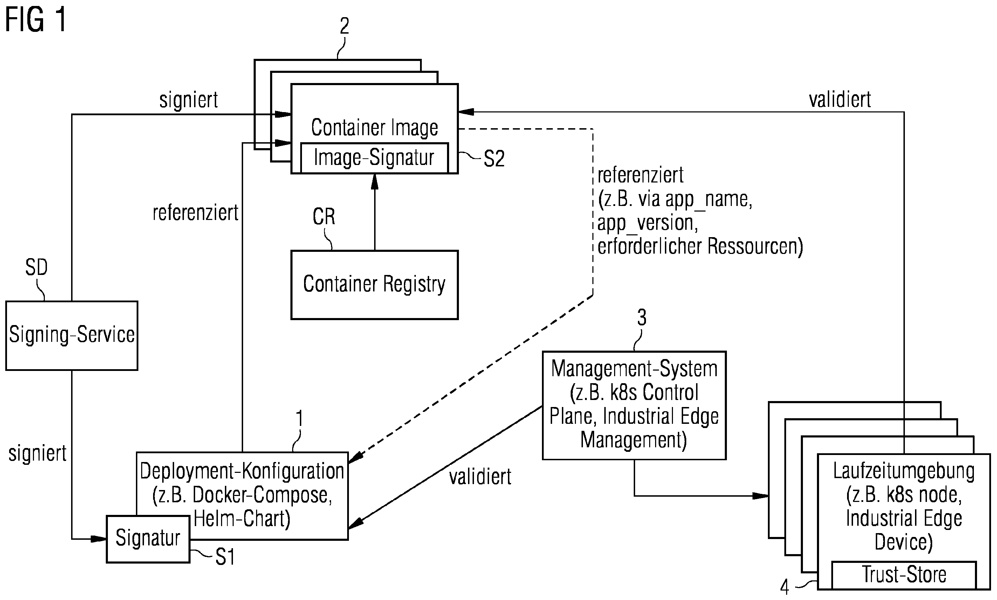

Fig. 1 zeigt eine Deployment-Konfiguration 1, die Container-Images 2 referenziert, welche z.B. in einer sog. Container-Registry CR (ein Software-Repository für Container-Images, das typischerweise von Entwicklern genutzt wird - dort werdenContainer-Images vorgehalten und können durch einen Ladeprozess Dritten zur Verfügung gestellt werden) vorgehalten werden. Sowohl die Deployment-Konfiguration 1 als auch die Container-Images 2 werden durch einen Signing-, Signatur-Service bzw. einen Signierdienst SD signiert (Signaturen S1 bzw. S2). Die Container-Images 2 referenzieren wiederum die Deployment-Konfiguration 1, die der App bzw. Anwendung zugehört, für welche die Container-Images verwendet werden. Zur Ausführung wird die Deployment-Konfiguration 1 einem Management-System 3 übergeben, welches die Deployment-Konfiguration anhand der Signatur S1 validiert. Durch das Management-System 3 wird dann die Laufzeitumgebung 4 zugewiesen. Die Laufzeitumgebung 4 validiert die durch die Deployment-Konfiguration 1 referenzierten Container-Images 2 anhand deren Signatur S2.

Die Validierung der Deployment-Konfiguration 1 mit Hilfe einer Signatur S1 muss bei dem Management-System 3 nicht für alle Konfigurationen global gelten. Diese kann auch z.B. für einzelne Kubernetes-Namespaces gelten oder auch nur für einzelne Industrial Edge Apps. Somit ist diese dann nur für die gewünschte Zielumgebung erforderlich, wenn für einzelne Images auf der Laufzeitumgebung überprüft werden soll, ob diese von der gewünschten Deployment-Konfiguration instanziiert wurden. Die Validierung der Deployment-Konfiguration kann bei Kubernetes z.B. mit Hilfe eines speziell geschriebenen Admission-Controllers (siehe auch https://kubernetes.io/docs/reference/access-authn-authz/admission-controllers/) erfolgen. Die Validierung kann auch mehrere Deployment-Konfigurationen umfassen. In diesem Falle würde man z.B. die Deployment-Konfigurationen mit Hilfe von in der Signatur enthaltenen Metadaten entsprechend verketten (z.B. mit Hilfe Erstellung einer verketteten Liste mit klarem Start- und Ende-Element) oder die Gesamtanzahl der Deployment-Konfigurationen in jedem Manifest (z.B. Kubernetes Manifest) verwenden. Die Verkettung hat den Vorteil, dass beispielsweise auch Helm-Charts o.ä. für das hier beschriebene Verfahren verwendet werden können.

Alternativ kann die Validierung auch über einen vorgelagerten Validierungsprozess erfolgen, welcher vor der Übergabe an das Management-System durchgeführt wird.

Im Management-System selbst wird im Rahmen des hier beschriebenen Verfahrens für jede Ressourcenanfrage beschrieben, ob es sich um eine validierte Ressourcenbeschreibung handelt oder nicht. Zusätzlich wird innerhalb der jeweiligen Ressourcenbeschreibung eine eindeutige Referenz zur gesamten Applikationsbeschreibung hinterlegt. Eine eindeutige Referenz kann z.B. eine App-ID, die Kombination aus App-Name und eindeutiger App-Versionsnummer oder z.B. ein bestimmter Kubernetes Namespace sein, welcher fest für das Applikationsbündel vorgesehen ist und worin keine weiteren Applikationen betrieben werden können.

Da dem Management-System für das hier beschriebene Verfahren vertraut wird, können die Metadaten einmalig für die jeweilige Deployment-Konfiguration zentral erfasst werden und bei der Übergabe der Gesamtapplikation nach der erfolgten Validierung dynamisch z.B. durch den vorgelagerten Validierungsprozess oder aber den Admission-Controller den Ressourcen zugewiesen werden.

Wie auf Fig. 1 dargestellt, signiert ein zentraler Signatur-Service SD sowohl die Container-Images 2 als auch die Deployment-Konfiguration 1. Prinzipiell kann für beide Signaturen S1 und S2 auch der gleiche Signaturschlüssel verwendet werden. Alternativ kann auch eine Chain-of-Trust bzw. Zertifikatskette zwischen den hinterlegten signierten Images 2 und der signierten Deployment-Konfiguration 1 aufgebaut werden.

Es sind (Container-)Signatursignaturverfahren bekannt, mit dessen Hilfe Container-Images oder auch andere Artefakte signiert werden können. Beispiele sind hierfür Cosign (siehe https://github.com/sigstore/cosign) oder z.B. Notary (siehe https://notaryproject.dev) in den Varianten v1 (Docker Content Trust) und v2. Unter zur Hilfenahme entsprechender Kubernetes AdmissionController (wie z.B. connaisseur, siehe auch https://artifacthub.io/packages/helm/connaisseur/connaisseur) erfolgt die Validierung der innerhalb der Deployment-Konfiguration validierten Images vor dem Start. Es wird hiermit geprüft, ob das referenzierte Image entsprechend signiert ist, nicht jedoch, ob dieses zu einer bestimmten Deployment-Konfiguration gehört.

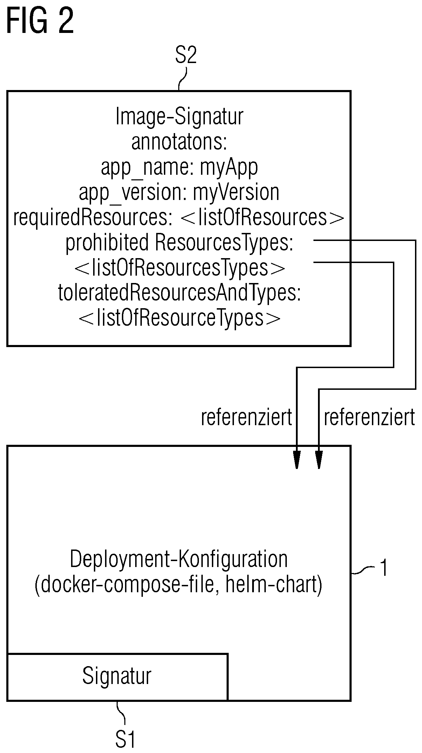

In Fig.2 ist die Definition der Abhängigkeiten zwischen der Container-Signatur S2, der signierten Deployment-Konfiguration 1 und den darin definierten Ressourcen aufgezeigt. Wie dort dargestellt, ist eine zentrale Idee des hier beschriebenen Verfahrens, dass mit Hilfe der oben beschrieben eindeutigen Referenz zur Deployment-Konfiguration 1 über app_id, app_name oder app_version die Verknüpfung zur Ressourcenbeschreibung der Gesamtapplikation hergestellt wird. Sofern Signaturverfahren wie z.B. Cosign verwendet werden, können diese Verknüpfungen - wie in Fig. 2 gezeigt - in Form von sog. "annotations" bzw. Annotationen bereitgestellt werden und sind Teil der signierten Payload eines jeden Images. Dies kann grundsätzlich auch analog ohne die entsprechenden Annotationen erfolgen, indem z.B. innerhalb des Images entsprechende eindeutige Image-Tags oder sonstige Metadaten hinzugefügt werden. Weiterhin können in diesen signierten Metadaten oder Annotationen des Images weitere Felder definiert werden. Z.B. können mit "requiredResources" Ressourcenlisten definiert werden, mit Hilfe derer beschrieben wird, welche vom Management-System verwalteten Ressourcen innerhalb der referenzierten Deployment-Konfiguration beschrieben werden müssen und somit für diese auch auf der orchestrierten Umgebung z.B. innerhalb eines beliebigen Knotens innerhalb des Clusters oder aber lokal z.B. auf dem Industrial Edge Device die Realisierungsvoraussetzungen vorhanden sein müssen. Bei den Ressourcen werden die eindeutigen Namen der Ressourcen verwendet und nicht der Ressourcentyp.

Angenommen wird im Rahmen des Ausführungsbeispiels, dass der App-Ersteller sowohl die Images als auch die Ressourcenbeschreibung als ein gesamtheitliches Applikationsbündel definiert und dieser somit auch die Ressourcennamen kennt, bevor entsprechende Signaturen für die Images und die Deployment-Konfiguration erzeugt werden.

Mit Hilfe weiterer Metadaten oder Annotationen können zusätzlich noch für die Applikation "tolaratedRessourceTypes" und "prohibitedRessourceTypes" definiert werden. Hiermit kann z.B. definiert werden, dass innerhalb des gewünschten Ziel-Namespaces durch den Betreiber hinzugefügte Istio-Sidecars akzeptiert werden oder bestimmte zusätzliche weitere Applikationen oder Ressourcen nicht gemeinsam mit dem Image betrieben werden dürfen. In beiden Fällen können auch reguläre Ausdrücke verwendet werden. Bei "Required-Ressources" kann innerhalb des Images zusätzlich auch durch die Verwendung regulärer Ausdrücke z.B. gefordert werden, dass eine andere Applikation in ihrer Gesamtheit z.B. in einer bestimmten Version auf der Laufzeitumgebung betrieben werden soll.

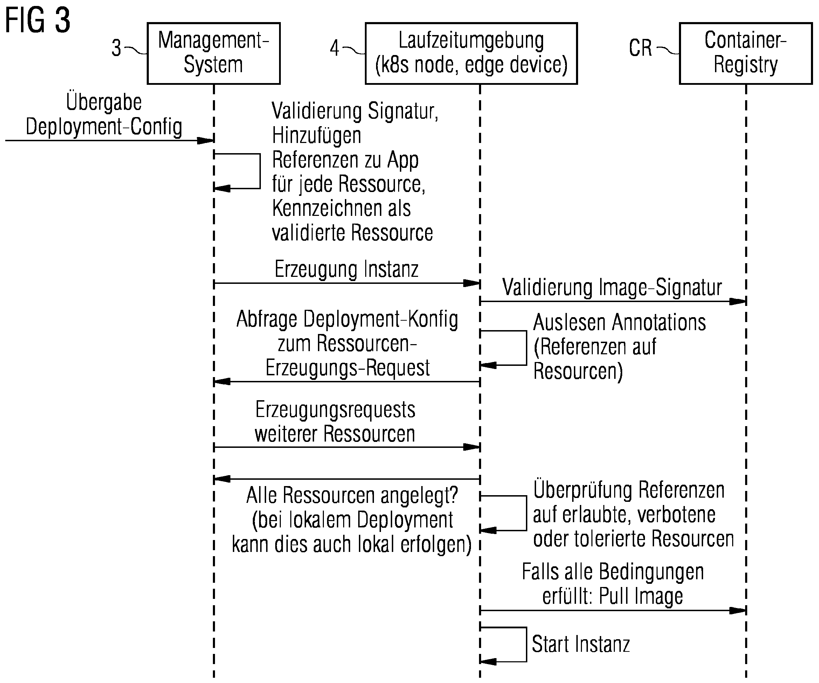

Fig. 3 zeigt den Ablauf eines erfindungsgemäßen Verfahrens bei der Ressourcenerzeugung bzw. -bereitstellung. Wie oben beschrieben, wird zunächst eine Deployment-Konfiguration bzw. das Helm-Chart an das Managementsystem 3 übergeben, welche die Gesamtapplikation beschreibt. Das Managementsystem validiert - wie oben beschrieben - die Deployment-Konfiguration, kennzeichnet durch Anreichern der Ressource mit Hilfe entsprechender Metadaten die Ressource als validierte Ressource und fügt zur Ressourcenbeschreibung zusätzlich die Referenz zur ursprünglichen Deployment-Konfiguration hinzu, indem z.B. eine App-ID, der App-Name und die eindeutige App-Version hinterlegt wird.

Im nächsten Schritt wird auf der Ziellaufzeitumgebung (z.B. dem Edge-Device) die Anfrage zu einer Instanz-Erzeugung übergeben. Bevor die Instanzerzeugung tatsächlich durchgeführt wird, validiert die Laufzeitumgebung die Signatur des Images gegenüber dem auf der Laufzeitumgebung hinterlegten Trustanchor. Ist die Validierung erfolgreich, werden nun die beschriebenen Metadaten oder Signatur-Annotationen ausgelesen, mit Hilfe derer die Referenz zur Deployment-Konfiguration (z.B. App-ID, App-Version, App-Name) durchgeführt werden kann und auch die erforderlichen, verbotenen und tolerierten weiteren Ressourcen definiert sind.

Sind die Daten ermittelt, fragt die Laufzeitumgebung beim Management-System die Ressourcenbeschreibung an. Diese ist im vorherigen Schritt entsprechend angereichert worden, sodass die Laufzeitumgebung überprüft, ob es sich um eine validierte Ressource handelt und diese die in der Container-Signatur hinterlegte identische App-Referenz aufweist. Ist beides nicht der Fall, wird der Start der Instanz verweigert und somit sichergestellt, dass die Instanziierung des Images nicht mit einer nicht-autorisierten Deployment-Konfiguration erfolgt. Gleichzeitig wird in diesem Schritt abgefragt, ob verbotene Ressourcentypen für z.B. den Kubernetes Namespace oder ein sonstiges eindeutig definiertes Installationsziel (z.B. Gerät, Cluster in seiner Gesamtheit o.ä.) existieren. Ist dies nicht der Fall, wird innerhalb des Management-Systems für die jeweilige Instanz-ID und die jeweilige Zielumgebung das Erzeugen bestimmter Ressourcentypen für die Lebenszeit der Instanz gesperrt. Hierfür kann z.B. eine entsprechende Datenbank-Tabelle innerhalb des Management-Systems verwendet werden. Wird diese später wieder gelöscht, wird dieser Eintrag ebenfalls entfernt. Durchgesetzt wird diese Art der Beschränkung z.B. durch einen Admission Controller auf dem Management-System.

Ist die Validierung erfolgreich, wird abgefragt, ob weitere von der zu erzeugenden Instanz geforderte Ressourcen in dessen Image-Signatur vorhanden sind. Angenommen wird, dass diese Ressourcen von der gleichen Deployment-Konfiguration beschrieben wurden und somit zeitnah bereitgestellt werden. Die Laufzeitumgebung fragt daher das Management-System ab, ob dieses die Erzeugung der weiteren benötigten Ressourcen in die Wege geleitet hat. Diese Anfrage kann z.B. über eine REST-API des Kubernetes API-Servers erfolgen. Diese kann z.B. durch periodisches Abfragen oder durch Abonnieren entsprechender Feeds durch die Laufzeitumgebung erfolgen. Ist die Ressourcenerzeugung durch das Management-System angefordert und sind alle Abhängigkeiten erfüllt, werden die Ressourcen auf der Laufzeitumgebung tatsächlich angelegt, somit also z.B. die Instanzen tatsächlich erzeugt.

Angenommen wird für das Ausführungsbeispiel, dass es keine sich wiedersprechenden Referenzen innerhalb eines Applikationsbündels gibt und validierte Ressourcen nur im gesamten Applikationskontext erzeugt oder gelöscht werden können.

Für Referenzen zu anderen Applikationsbündel bzw. Deployment-Konfigurationen müsste das Verfahren mit Hilfe von z.B. - wie oben beschrieben - zusätzlicher Tabelleneinträge innerhalb des Management-Systems implementiert werden, mit Hilfe derer die Abhängigkeiten zu anderen Applikationen/Deployment-Konfigurationen beschrieben und erfasst werden können. Die Löschung von Ressourcen durch eine Deployment-Konfiguration, von der eine andere abhängig ist, kann somit erst erfolgen, wenn auf dem Management-System die Abhängigkeit durch Löschen der abhängigen Deploymentkonfiguration behoben ist.

Validierte Deployment-Konfigurationen, die Images mit Abhängigkeiten zu eigenen Ressourcen enthalten, werden analog - wie oben beschrieben - gelöscht, indem zunächst die Ressourcen durch das Management als zu löschen markiert werden und ebenfalls verzögert nach erfolgter Validierung des "prepare to delete" der abhängigen Ressourcen gelöscht werden.

Das Vorgehen im Rahmen des Ausführungsbeispiels hat u.a. fol-gende Merkmale bzw. Vorteile:
- Es kann der gleiche Signaturschlüssel für die Deployment-Konfiguration und die Container-Images verwendet werden. Dies gilt auch für unterschiedliche Apps.
- Welche Ressourcen erzeugt werden dürfen, wird als Annotationen bzw. Metadaten in der Image-Signatur definiert.
- Die Referenz zu einer Deployment-Konfiguration bzw. zu einer App mit einer bestimmten Version wird ebenfalls durch die Definition bestimmter Metadaten spezifiziert.
- Die Container-Laufzeitumgebung wertet die definierten Metadaten aus und verzögert die Ausführung des Starts einer Instanz so lange, bis die Ressourcenerzeugungsanfragen erstellt sind.
- Die Signatur der Deployment-Konfiguration kann sich auch auf einzelne Ressourcendefinitionen/Dateien beziehen. Diese müssen jedoch dann über einen gemeinsamen Identifier referenziert werden.
- Die Ressourcenerzeugungsanfragen werden so lange bzgl. ihrer Ausführung verzögert, bis entweder lokal die Bedingungen aller Ressourcen erzeugt sind oder aber das Management-System bei einem verteiltem Deployment mitteilt, dass Ressourcenanfragen erzeugt wurden.
- Die Ausführung/Bereitstellung von Ressourcen wird auf analoge Weise beendet und erst freigegeben, wenn für alle Ressourcen entsprechende Löschanfragen erzeugt wurden.
- Annahme ist, dass dem Management vertraut wird und die Validierung für jede Deployment-Einheit (docker-compose-file, Kubernetes-Namespace) auf der Laufzeitumgebung durchgeführt wird.

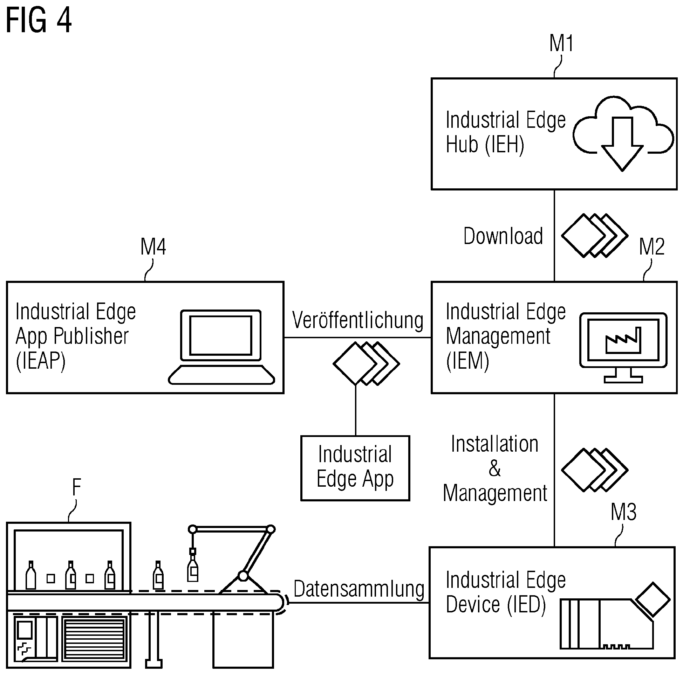

In Fig. 4 ist ein verteilt aufgebautes Management-System (Industrial Edge) gezeigt, für welches die Erfindung zum Einsatz kommen kann. Es handelt sich um ein Konzept der Firma Siemens, welche Produkte für dessen Realisierung (HW und SW) vertreibt. Dabei ist die Ver- bzw. Bearbeitung von Daten vorgesehen, die aus einer Fabrik stammen. Das Management-System umfasst folgende Komponenten:

### Industrial Edge Hub (IEH)

Der "Industrial Edge Hub" M1 ist der Ausgangspunkt für das Herunterladen von Software (z.B. Betriebssystem) für die "Industrial Edge Management" Komponente und deren Konfiguration.

### Industrial Edge Management (IEM)

Das "Industrial Edge Management" M2 ist die zentrale Infrastruktur-Komponente zum Managen sowohl von verbundenden "Edge Devices" als auch "Edge Apps". Z.B. werden "Edge Apps" über das Industrial Edge Management M2 auf den Edge Devices installiert.

### Industrial Edge Devices (IED)

Industrial Edge Devices M3 sammeln Daten z.B. von einer Fabrik F oder Fertigungsabschnitten einer Fabrik und bearbeiten, verarbeiten oder kontrollieren sie mittels Edge Apps.

### Industrial Edge App Publisher (IEAP)

Über den "Industrial Edge App Publisher" M4 werden Edge Apps konzipiert und auf das Industrial Edge Management M2 übertragen.

Die Edge Apps werden typischerweise als containerisierten Anwendungen bereitgestellt. Das IEM operiert dann als Orchestrator für die Ausführung von Apps in einer Laufzeitumgebung der IEDs.

Alle Vorrichtungselemente IEH, IEM, IED und IEAP sind mittels geeigneter Hardware realisiert. D.h., hinter diesen Elementen stehen typischerweise Rechner mit CPU oder MCU, Speicher, Schnittstellen etc.

## Patentansprüche

1. Verfahren zur fehlerreduzierten Ausführung einer containerisierten Anwendung, umfassend
- Bereitstellen eines für die Ausführung der Anwendung benötigten Container-Images für die containerisierte Anwendung;
- Signieren des Container-Images mit einer Signatur, die eine anwendungsbezogene Information enthält;
- Bereitstellen einer Deployment-Konfiguration für die containerisierte Anwendung mit einer Information zu dem für die Ausführung der Anwendung benötigten Container-Image;
- Signieren der Deployment-Konfiguration mit einer Signatur, die eine Referenz auf die Anwendung enthält;
- Übergeben der Deployment-Konfiguration an einen Orchestrator zur Instanziierung der Anwendung;
- Validieren der Signatur der Deployment-Konfiguration und Identifizieren der Anwendung mit Hilfe der Signatur; und
- Zugreifen auf das Container-Image und Validieren des Container-Images als für die Anwendung bereitgestelltes Image mit Hilfe der in der Signatur enthaltenen anwendungsspezifischen Information.

2. Verfahren nach Anspruch 1,
**dadurch gekennzeichnet, dass**
auf eine Container-Registry durch eine Laufzeitumgebung zugegriffen wird, die vom Orchestrator für die Ausführung der containerisierten Anwendung vorgesehen wird.

3. Verfahren nach Anspruch 2,
**dadurch gekennzeichnet, dass**
entweder das Validieren des Container-Images als für die Anwendung bereitgestelltes Image durch die Laufzeitumgebung durchgeführt und dafür die Referenz auf die Anwendung oder eine mittels der Referenz erhaltene Information zur Identifikation der Anwendung von dem Orchestrator an die Laufzeitumgebung übermittelt wird, oder
das Validieren des Container-Images als für die Anwendung be-reitgestelltes Image durch den Orchestrator durchgeführt und dafür die anwendungsbezogene Information von der Laufzeitumgebung an den Orchestrator übermittelt wird.

4. Verfahren nach einem der vorhergehenden Ansprüche,
**dadurch gekennzeichnet, dass**
- die Signatur des Container-Images eine Information zu einer für die Anwendung benötigten Ressource enthält;
- die Deployment-Konfiguration für die Anwendung benötigte Ressourcen spezifiziert; und
- mittels der Information zu der benötigten Ressource und der Spezifizierung von benötigten Ressourcen in der Deployment-Konfiguration die Ressource validiert wird.

5. Verfahren nach Anspruch 4,
**dadurch gekennzeichnet, dass**
die Bereitstellung oder Anlegung der Ressource erst nach erfolgreicher Validierung erfolgt.

6. Verfahren nach Anspruch 5,
**dadurch gekennzeichnet, dass**
die vollständige Instanziierung bzw. Ausführung der Anwendung von der Validierung aller benötigten Ressourcen abhängig gemacht wird.

7. Verfahren nach Anspruch 5 oder 6,
**dadurch gekennzeichnet, dass**
die Gültigkeit der Validierung auf eine festgelegte Laufzeitumgebung oder auf einen Teil einer festgelegten Laufzeitumgebung beschränkt wird.

8. Verfahren nach einem der vorhergehenden Ansprüche,
**dadurch gekennzeichnet, dass**
- die Signatur des Container-Images eine Information zu einer Bedingung für die Verwendung einer Ressource bei der Anwendung enthält; und
- die Bedingung vor der vollständigen Instanziierung bzw. Ausführung der Anwendung überprüft wird.

9. Verfahren nach einem der vorhergehenden Ansprüche,
**dadurch gekennzeichnet, dass**
das Verfahren für eine Mehrzahl von verketteten Deployment-Konfigurationen durchgeführt wird.

10. Verfahren nach einem der vorhergehenden Ansprüche,
**dadurch gekennzeichnet, dass**
für die Signatur des Container-Images und der Deployment-Konfiguration der gleiche Signierschlüssel verwendet wird oder beide Signaturen über eine Zertifikatskette miteinander verknüpft werden.

11. Vorrichtung, welche zur Durchführung eines Verfahrens nach einem der Ansprüche 1 bis 10 ausgebildet ist.
